# EUROPÄISCHE PATENTSCHRIFT

(11) **EP 3 460 999 B1**
(45) Veröffentlichungstag und Bekanntmachung des Hinweises auf die Patenterteilung: **21.08.2019**
(21) Anmeldenummer: 17192864.1
(22) Anmeldetag: 25.09.2017
(51) Int. Cl.: H02S 50/15

(54) **VERFAHREN UND ANORDNUNG ZUR GROSSFLÄCHIGEN PRÜFUNG OPTISCHER EIGENSCHAFTEN EINER SCHICHT**
METHOD AND ASSEMBLY FOR LARGE-SURFACE TESTING OF OPTICAL PROPERTIES OF A LAYER
PROCÉDÉ ET AGENCEMENT D'ESSAI À GRANDE SURFACE DE PROPRIÉTÉS OPTIQUES D'UNE COUCHE

(43) Veröffentlichungstag der Anmeldung: 27.03.2019
(73) Patentinhaber: Fraunhofer-Gesellschaft zur Förderung der angewandten Forschung e.V., 80686 München (DE)
(72) Erfinder: TUREK, Marko, 06108 Halle (DE); HAGENDORF, Christian, 06108 Halle (Saale) (DE); SPORLEDER, Kai, 06667 Weißenfels (DE)
(74) Vertreter: Gagel, Roland

(56) Entgegenhaltungen:
- EP-A1- 3 182 582
- EP-A2- 2 473 008
- US-A1- 2013 027 545

## Beschreibung

### Technisches Anwendungsgebiet

Die vorliegende Erfindung betrifft ein Verfahren sowie eine Anordnung zur Prüfung optischer Eigenschaften einer Schicht, insbesondere einer Schicht einer Solarzelle oder eines Solarmoduls, bei denen die Schicht mit einer Beleuchtungseinrichtung beleuchtet und an der Schicht reflektierte Strahlung mit einem optischen Detektor erfasst wird. Das Dokument US2013/027545A beschreibt ein Verfahren zur Prüfung optischer Eigenschaften einer Schicht.

Die Prüfung von Schichten auf optische Eigenschaften, insbesondere auf deren Homogenität und/oder Schichtdicke, spielt in vielen technischen Bereichen eine wichtige Rolle, beispielsweise zur Qualitätssicherung in der Fertigung. So werden beispielsweise bei der Herstellung von Solarzellen und Solarmodulen im laufenden Produktionsprozess standardmäßig Messungen der elektrischen Leistung mittels Sonnensimulatoren durchgeführt. Zur detaillierten Identifikation von Produktionsfehlern werden begleitend zum Teil auch Elektrolumineszenzaufnahmen oder Thermographieaufnahmen der Solarzellen oder Solarmodule erstellt. Ebenso werden geometrische Eigenschaften der gesamten Solarzelle bzw. des gesamten Solarmoduls auf Basis bildgebender Verfahren mit hoher Ortsauflösung aber ohne spektrale Informationen bewertet. Mit diesen Methoden ist es jedoch nicht möglich, eine separate Bewertung der Oberflächenschichten wie z.B. der Passivierschicht auf Solarzellen oder der Antireflexschicht auf Modulgläsern vorzunehmen. Die optischen Eigenschaften der Passivier- oder Antireflexschicht auf der Zell- oder Modulvorderseite sind jedoch entscheidend für den Wirkungsgrad der Solarzelle oder des Solarmoduls. Ebenso lassen sich aus der Homogenität und Dicke dieser Schichten Rückschlüsse auf die Stabilität der Produktionsprozesse ziehen. Zur Bestimmung der optischen Eigenschaften, insbesondere der optischen Reflexion und Schichtdicke sowie der Schichthomogenität, sind zusätzlich Messungen notwendig, die sowohl spektrale als auch ortsaufgelöste Informationen liefern. Diese können jedoch bisher entweder nur mit Laborverfahren oder nur lokal in einem Bereich von einigen mm² vorgenommen werden.

### Stand der Technik

Bei der Nutzung von Labormessgeräten wird weißes Licht in der Regel mit einem Monochromator in seine spektralen Anteile zerlegt und auf die Oberflächenschicht gerichtet. Die Oberfläche des Prüfkörpers wird dabei sequentiell mit den unterschiedlichen spektralen Anteilen beleuchtet und mittels eines spektral nicht sensitiven Sensors die Reflexion gemessen. Da bei dieser Technik jeweils nur ein kleiner Teil des von der Lichtquelle abgestrahlten Lichtes für die Reflexionsmessung verwendet wird, sind für eine großflächige Beleuchtung sehr intensive Lichtquellen erforderlich. Weiterhin erfordert der sequentielle Messablauf bei Nutzung eines Monochromators eine längere Zeitspanne und ist daher nicht für Inline-Messungen während der Produktion geeignet.

Bei einer weiteren bekannten Labormesstechnik wird die Oberfläche des Prüfkörpers mit weißem Licht beleuchtet und mit einem spektral sensitiven Spektrometer die Reflexion in verschiedenen Wellenbereichen vermessen. Wird als Spektrometer eine Spektral-Kamera wie beispielsweise eine Zeilenkamera verwendet, können sowohl orts- als auch spektralaufgelöste Messungen gleichzeitig erfolgen. Da die Bildgebung sowohl orts- und spektralaufgelöste Informationen liefern muss, dauert der Messvorgang jedoch entweder relativ lange oder es muss mit reduzierter Ortsauflösung gemessen werden.

Aus der US 2015/0160138 A1 ist ein Verfahren zur Reflexionsbestimmung an Solarzellen bekannt, bei dem eine breitbandige Weißlichtquelle als Beleuchtungseinrichtung und eine CCD-Kamera als optischer Detektor zur ortsaufgelösten Erfassung der reflektierten optischen Strahlung eingesetzt werden. Weiterhin wird eine Infrarot-Lichtquelle für Transmissionsmessungen verwendet. Es wird dabei jedoch jeweils nur die Gesamtintensität der Weißlichtreflexion und der Infrarottransmission detektiert. Durch Vergleich beider Messungen können dann Informationen über Partikel in oder auf der untersuchten Schicht oder Löcher in dieser Schicht gewonnen werden.

Aus der WO 2012/102603 A1 ist ein Verfahren zur Bestimmung der Reflexion an Oberflächenschichten von Solarzellen bekannt, bei dem das Licht einer breitbandigen Lichtquelle räumlich in spektrale Anteile aufgetrennt und mit diesen spektralen Anteilen ein Linienscan der Oberfläche durchgeführt wird. Die Detektion der reflektierten Anteile erfolgt mit einem multispektralen Sensor.

Die Aufgabe der vorliegenden Erfindung besteht darin, ein Verfahren sowie eine Anordnung zur Prüfung der optischen Eigenschaften einer Schicht bereitzustellen, die eine großflächige und schnelle Reflexionsmessung an der Schicht ermöglichen und vorzugsweise ortsaufgelöste spektrale Informationen liefern. Insbesondere sollen das Verfahren und die Anordnung zur Prüfung der Oberflächenschicht einer Solarzelle oder eines Solarmoduls geeignet sein und sich auch während der Produktion der Solarzellen inline einsetzen lassen.

### Darstellung der Erfindung

Die Aufgabe wird mit dem Verfahren und der Anordnung gemäß den Patentansprüchen 1 und 9 gelöst. Vorteilhafte Ausgestaltungen des Verfahrens sowie der Anordnung sind Gegenstand der abhängigen Patentansprüche oder lassen sich der nachfolgenden Beschreibung sowie dem Ausführungsbeispiel entnehmen.

Bei dem vorgeschlagenen Verfahren wird die Schicht mit einer Beleuchtungseinrichtung vollflächig beleuchtet und an der Schicht reflektierte Strahlung mit einem optischen Detektor integral oder ortsaufgelöst erfasst. Das Verfahren zeichnet sich dadurch aus, dass die Schicht in zeitlicher Abfolge mit optischer Strahlung unterschiedlicher Wellenlänge oder Wellenlängenbereiche vollflächig beleuchtet und mit dem optischen Detektor von der Schicht bei den unterschiedlichen Wellenlängen oder Wellenlängenbereichen reflektierte Strahlung synchron dazu erfasst wird, wobei für die Beleuchtung eine Beleuchtungseinrichtung eingesetzt wird, die für jede der unterschiedlichen Wellenlängen oder Wellenlängenbereiche eine getrennt ansteuerbare Gruppe von Lichtquellen, insbesondere LEDs, aufweist.

Unter der vollflächigen Beleuchtung ist dabei zu verstehen, dass zur gleichen Zeit die gesamte Oberfläche der Schicht mit der optischen Strahlung der Beleuchtungseinrichtung bestrahlt wird, also keinerlei scannende Bewegung oder Führung eines Beleuchtungsstrahls über die Schichtoberfläche erforderlich ist. Die Beleuchtungseinrichtung verfügt hierzu über entsprechende optische Elemente, die das von den jeweils angesteuerten Lichtquellen der Beleuchtungseinrichtung emittierte Licht mit einer möglichst homogenen lateralen Intensitätsverteilung auf die gesamte Oberfläche der Schicht projizieren. Die Gruppen von Lichtquellen können dabei für die unterschiedlichen Wellenlängen bzw. Wellenlängenbereiche die gleiche oder auch eine unterschiedliche Anzahl an Lichtquellen enthalten. Eine unterschiedliche Anzahl kann insbesondere erforderlich sein, wenn Lichtquellen einer Wellenlänge oder eines Wellenlängenbereiches eine andere Lichtintensität liefern als Lichtquellen einer anderen Wellenlänge oder eines anderen Wellenlängenbereiches. Eine Gruppe kann dabei auch nur aus einer einzelnen Lichtquelle bestehen. Die Lichtquellen der einzelnen Gruppen sind vorzugsweise jeweils annähernd gleichmäßig über die Fläche verteilt, in der alle Lichtquellen, also die Lichtquellen aller Gruppen, angeordnet sind. Der optische Detektor ist so ausgebildet, dass er die gesamte Schicht integral oder vorzugsweise ortsaufgelöst erfassen kann. Er wird vorzugsweise unter einem Winkel zur Haupteinfallsrichtung der Beleuchtungsstrahlung angeordnet. In einer bevorzugten Ausgestaltung wird als optischer Detektor eine Kamera, beispielsweise eine CCD-Kamera, mit einer für die Messung gewünschten, ausreichend hohen Ortsauflösung eingesetzt.

Durch die Reflexionsmessung mit unterschiedlichen Wellenlängen oder Wellenlängenbereichen in zeitlicher Abfolge bei gleichzeitig vollflächiger Beleuchtung und integraler oder ortsaufgelöster Erfassung der reflektierten Strahlung kann in Verbindung mit der eingesetzten Beleuchtungseinrichtung eine schnelle Messung durchgeführt werden, mit der spektrale und vorzugsweise gleichzeitig auch ortsaufgelöste Information für eine Bestimmung optischer Eigenschaften der Schicht erfasst werden kann. Insbesondere kann durch die gewählte Beleuchtungseinrichtung eine sehr schnelle Umschaltung zwischen den einzelnen Wellenlängen bzw. Wellenlängenbereichen im Millisekundenbereich erfolgen, so dass in Verbindung mit der vollflächigen Beleuchtung der Schicht eine vollständige Messung - über alle zur Verfügung stehenden Wellenlängen bzw. Wellenlängenbereiche - im Bereich von einigen Millisekunden bis zu mehreren Sekunden möglich ist. Dadurch lassen sich das vorgeschlagene Verfahren und die zugehörige Anordnung für eine Inline-Messung bei der Produktion der entsprechenden Bauteile mit der zu prüfenden Schicht einsetzen.

In der bevorzugten Ausgestaltung des vorgeschlagenen Verfahrens erfolgt vor der Durchführung der Messung eine Kalibrierung der Beleuchtungseinrichtung und des optischen Detektors mittels einer Referenzprobe mit bekannter Oberflächenreflexion. Diese Kalibrierung ermöglicht die Ermittlung der absoluten Reflexionswerte für die unterschiedlichen Wellenlängen oder Wellenlängenbereiche bei der anschließenden Messung. Damit kann dann ortsaufgelöst die Schichtdicke der untersuchten Schicht bestimmt werden.

Durch die großflächige Messung wird mit dem vorgeschlagenen Verfahren eine Differenzierung von großflächigen und lokalen Defekten, beispielsweise eine nicht-konstante Schichtdicke der Antireflex- oder Passivierungsschichten einer Solarzelle oder eines Solarmoduls versus lokaler Fehldrucke der Metallisierung und/oder Reflexion von Rückseitenfolien ermöglicht. Dafür ist eine hohe Ortsauflösung im Bereich von µm bis mm notwendig, wie sie mit dem vorgeschlagenen Verfahren und der vorgeschlagenen Anordnung bei Einsatz eines geeigneten optischen Detektors mit entsprechender Ortsauflösung erreicht wird. Das Verfahren und die Anordnung ermöglichen somit in dieser Ausgestaltung die großflächige und spektral aufgelöste Messung der Reflexion an planaren Prüfkörpern wie beispielsweise Solarzellen und Solarmodulen mit hoher Ortsauflösung. Durch den Verzicht auf mechanisch zu bewegende Komponenten für die sequentielle Beleuchtung mit unterschiedlichen Wellenlängen oder Wellenlängenbereichen wird eine deutliche Beschleunigung der Messung erreicht. Das Verfahren und die Anordnung ermöglichen die Identifikation von Defekten aufgrund der spektralen Information, beispielsweise optischer Schichtdickeninhomogenitäten von Frontseiten-, Passivier- oder Antireflexschichten. Durch die unterschiedlichen Wellenlängen wird eine Reflexion aus verschiedenen Tiefenbereichen der Schicht abhängig von der wellenlängenabhängigen Eindringtiefe erfasst, die zur Identifikation von Dotierungsbereichen und Kontaktierungsstrukturen genutzt werden kann. Aufgrund der kurzen Messzeiten eignen sich das Verfahren und die Anordnung für eine Integration in Produktionslinien zur Inline-Prozesskontrolle. Die spektrale Information ermöglicht neben einer Quantifizierung der Schichtdicke auch eine Fehlerklassifizierung anhand der betroffenen spektralen Bereiche.

Ein besonderer Vorteil besteht bei der Integration des Verfahrens und der Anordnung in Produktionslinien für die Herstellung von Solarzellen oder Solarmodulen, in denen ein Sonnensimulator auf Basis mehrerer LEDs eingesetzt wird. Ein derartiger Sonnensimulator weist in einigen Ausgestaltungen bereits unterschiedliche Gruppen von LEDs auf, die unterschiedliche Wellenlängen bzw. Wellenlängenbereiche emittieren, um dadurch das Sonnenspektrum möglichst genau nachzubilden. Die Integration des vorgeschlagenen Verfahrens bzw. der vorgeschlagenen Anordnung erfordert dann nur noch die Anordnung eines entsprechenden, vorzugsweise ortsauflösenden optischen Detektors und die Ansteuerung der Beleuchtungseinrichtung und des Detektors derart, dass jeweils zeitlich nacheinander nur eine Gruppe von LEDs, die eine Wellenlänge oder einen Wellenlängenbereich emittieren, betrieben werden und der optische Detektor synchron dazu die reflektierte optische Strahlung erfasst. Für die Durchführung des Verfahrens wird somit kein zusätzlicher Platz innerhalb der Produktionslinie benötigt und die Messung verlängert die bereits in Verbindung mit dem Sonnensimulator erforderlichen Messzeiten nicht oder nur im Millisekundenbereich. Bei der Messung an Solarzellen oder Solarmodulen kann damit auch eine Kombination der Leistungsmessung von Solarzellen und Solarmodulen mit Reflexionsmessungen in einem Gerät und einem Messschritt erfolgen.

Die vorgeschlagene Anordnung zur Durchführung des Verfahrens umfasst entsprechend eine Beleuchtungseinrichtung, die mehrere getrennt ansteuerbare Gruppen von Lichtquellen aufweist, von denen jede Gruppe eine andere Wellenlänge oder einen anderen Wellenlängenbereich emittiert. Die Beleuchtungseinrichtung ist so ausgebildet, dass sie einen Bereich von wenigstens 100 cm², bevorzugt wenigstens 1 m², jeweils bei jeder der vorhandenen Wellenlängen oder Wellenlängenbereiche in einer Prüfebene möglichst homogen beleuchten kann. Die Anordnung weist weiterhin einen optischen Detektor auf, mit dem von einer Oberfläche in der Prüfebene reflektierte optische Strahlung integral oder vorzugsweise ortsaufgelöst erfasst werden kann. Eine Steuereinheit der Anordnung ist so ausgebildet, dass sie die Beleuchtungseinrichtung und den optischen Detektor so ansteuern kann, dass die Beleuchtungseinrichtung in zeitlicher Abfolge optische Strahlung unterschiedlicher Wellenlänge oder Wellenlängenbereiche auf die Prüfebene projiziert und der optische Detektor die von der Prüfebene bei den unterschiedlichen Wellenlängen oder Wellenlängenbereichen diffus reflektierte Strahlung synchron dazu erfasst.

Der optische Detektor ist relativ zur Prüfebene vorzugsweise verstellbar angeordnet ist, um eine Erfassung der an der Oberfläche reflektierten Strahlung aus unterschiedlichen Positionen bzw. Richtungen zu ermöglichen. Aus den damit erhaltenen unterschiedlichen Aufnahmen kann dann eine eventuell vorliegende Strukturierung der Oberfläche bestimmt werden. Alternativ können diese Aufnahmen auch mit mehreren optischen Detektoren aufgezeichnet werden, die an unterschiedlichen Positionen angeordnet sind.

Das vorgeschlagene Verfahren und die zugehörige Anordnung lassen sich besonders vorteilhaft bei der Qualitätskontrolle von Solarzellen und Solarmodulen einsetzen. Weiterhin können das Verfahren und die Anordnung jedoch auch für die quantitative Prüfung optischer Eigenschaften, d.h. insbesondere der Schichtdicke, der Homogenität oder des Reflexionsverhaltens, der Oberfläche oder Oberflächenschicht von anderen planaren Prüfkörpern eingesetzt werden.

### Kurze Beschreibung der Zeichnungen

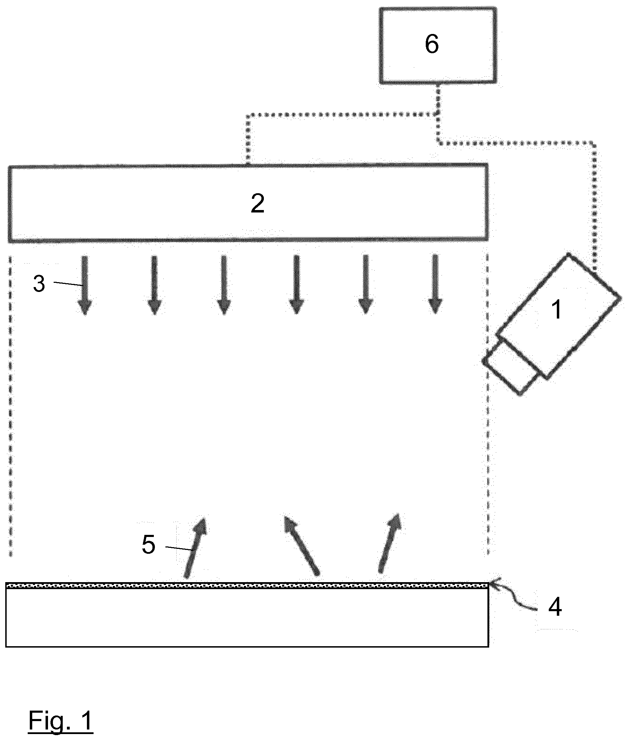

Das vorgeschlagene Verfahren und die zugehörige Anordnung werden nachfolgend anhand eines Ausführungsbeispiels in Verbindung mit der Zeichnung nochmals näher erläutert. Hierbei zeigt
- Fig. 1: eine schematische Darstellung eines beispielhaften Aufbaus der vorgeschlagenen Anordnung.

### Wege zur Ausführung der Erfindung

Das vorgeschlagene Verfahren und die vorgeschlagene Anordnung ermöglichen eine schnelle, großflächige Messung der spektral aufgelösten Reflexion von Oberflächen, in einer bevorzugten Ausgestaltung auch mit hoher Ortsauflösung. Figur 1 zeigt eine schematische Darstellung eines beispielhaften Aufbaus der vorgeschlagenen Anordnung. Die Anordnung weist eine Beleuchtungseinrichtung 2 auf, in der in diesem Beispiel mehrere Gruppen von LEDs arrayförmig angeordnet sind. Jede Gruppe von LEDs emittiert monochromatische Strahlung 3 bei einer anderen Wellenlänge. Die LEDs jeder Gruppe sind dabei möglichst gleichmäßig über die Fläche des gesamten Arrays verteilt angeordnet. Die Auswahl und Anzahl der unterschiedlichen Gruppen von LEDs bzw. der von der Beleuchtungseinrichtung emittierten Wellenlängen kann an die jeweilige Anwendung angepasst werden. Für die Prüfung von Antireflexschichten auf Silizium bei der Herstellung von Solarzellen oder Solarmodulen eignet sich ein Wellenlängenbereich von 300nm bis 1100nm, aus dem etwa 10 oder mehr unterschiedliche Wellenlängen bzw. Farbkanäle in etwa gleich verteilt über den gesamten Wellenlängenbereich für die Beleuchtung gemäß dem vorliegenden Verfahren gewählt werden sollten.

Die Beleuchtungseinrichtung 2 ist so ausgebildet, das sie bei jeder der zur Beleuchtung ausgewählten Wellenlängen oder Wellenlängenbereiche, in der vorliegenden Patentanmeldung auch als Farbkanäle bezeichnet, eine ausreichend homogene Lichtintensität über die gesamte zu vermessende Fläche liefert. Die Beleuchtungseinrichtung beleuchtet dabei eine Prüfebene, in der im vorliegenden Beispiel eine Oberfläche 4 eines Prüfkörpers, beispielsweise einer Solarzelle mit einer Antireflexschicht, angeordnet ist. Mit einer Kamera 1, die auf die von der Beleuchtungseinrichtung 2 emittierten Wellenlängen sensitiv ist, wird an der Prüfkörperoberfläche 4 reflektierte Strahlung 5 ortsaufgelöst über die gesamte Prüfkörperoberfläche 4 erfasst. Bei dieser Kamera 1 kann es sich beispielsweise um eine Si-Kamera als abbildende Messeinheit handeln. Bei spiegelnden Prüfkörperoberflächen wird die Kamera so angeordnet, dass sie keine direkten Reflexe der Strahlung an der Prüfkörperoberfläche sondern nur an der Oberfläche gestreute Strahlanteile erfasst.

Eine Datenerfassungs-, Steuer- und Bildauswerteeinheit 6 steuert die Beleuchtungseinrichtung 2 und die Kamera 1 so an, dass die einzelnen Farbkanäle der Beleuchtungseinrichtung 2 nacheinander betrieben werden und synchron dazu die Kamera 1 die Reflexion misst. Alle Farbkanäle müssen hierbei einzeln angesteuert werden können und mit der Kamera synchronisiert sein, so dass Beleuchtung und Bildgebung für die einzelnen Farbkanäle jeweils gleichzeitig erfolgen. Die Beleuchtungseinrichtung 2 und die Kamera 1 müssen während der Bildgebungszeitdauer stabil gehalten werden, um eine hohe quantitative Aussagekraft der Ergebnisse zu erhalten. Die Bildauswerteeinrichtung, mit der die erfassten Messungen bzw. Bilddaten dann ausgewertet werden, kann selbstverständlich auch getrennt von der Datenerfassungs- und Steuereinheit angeordnet sein.

Bei der Durchführung des vorgeschlagenen Verfahrens wird vorzugsweise vorab eine Kalibrierung der Beleuchtungseinrichtung 2 und der Kamera 1 mittels einer Referenzprobe mit bekannter Oberflächenreflexion bei den unterschiedlichen Wellenlängen durchgeführt. Für die Messung wird dann die Beleuchtungseinrichtung 2 zunächst mit einer ersten definierten Wellenlänge bzw. einen ersten Farbkanal aktiviert. Es erfolgt eine Aufnahme eines Bildes mit der Kamera 1 bei fest definierter Beleuchtungszeit. Anschließend werden ein numerischer, pixelweiser Vergleich der Intensität des Kamerabildes mit der Kalibriermessung der Referenzprobe und eine pixelweise Berechnung der Reflexion für die vorgegebene Wellenlänge durchgeführt. Diese Schritte werden für alle in der Beleuchtungseinrichtung vorgesehenen Wellenlängen bzw. Farbkanäle wiederholt. Aus den Reflexionsdaten zu den einzelnen Wellenlängen kann dann eine Berechnung der Schichtdicke und/oder Homogenität der Oberfläche erfolgen. Hierfür kann beispielsweise ein geeignetes Modell für die Schichtdicke herangezogen werden. Weiterhin können auch Pass-/Fail-Kriterien für die aus der Messung ermittelten Eigenschaften, insbesondere die Schichtdicke und/oder Homogenität, festgelegt und bei Einsatz des Verfahrens in einem Produktionsprozess angewendet werden, um fehlerhafte Produkte jeweils sofort erkennen und ggf. aussortieren zu können.

### Bezugszeichenliste

- 1: Kamera
- 2: Beleuchtungseinrichtung
- 3: emittiertes monochromatisches Licht
- 4: Prüfkörperoberfläche
- 5: reflektiertes Licht
- 6: Datenerfassungs-, Steuer- und Bildauswertungseinheit

## Patentansprüche

1. Verfahren zur Prüfung optischer Eigenschaften einer Schicht, insbesondere einer Schicht einer Solarzelle oder eines Solarmoduls, bei dem
die Schicht (4) mit einer Beleuchtungseinrichtung (2) vollflächig beleuchtet und an der Schicht (4) reflektierte Strahlung (5) mit wenigstens einem optischen Detektor (1) erfasst wird,
**dadurch gekennzeichnet,**
**dass** die Schicht (4) in zeitlicher Abfolge mit optischer Strahlung (3) unterschiedlicher Wellenlänge oder Wellenlängenbereiche vollflächig beleuchtet und mit dem optischen Detektor (1) von der gesamten Schicht bei den unterschiedlichen Wellenlängen oder Wellenlängenbereichen reflektierte Strahlung (5) synchron dazu ortsaufgelöst erfasst wird,
wobei die Beleuchtung der Schicht (4) mit einer Beleuchtungseinrichtung (2) erfolgt, die für jede der unterschiedlichen Wellenlängen oder Wellenlängenbereiche eine getrennt ansteuerbare Gruppe von Lichtquellen aufweist, wobei eine Fläche von wenigstens 100 cm² bei jeder der Wellenlängen oder jedem der Wellenlängenbereiche vollflächig beleuchtet wird.

2. Verfahren nach Anspruch 1,
**dadurch gekennzeichnet,**
**dass** die Beleuchtung der Schicht (4) mit einer Beleuchtungseinrichtung (2) erfolgt, die für jede der unterschiedlichen Wellenlängen oder Wellenlängenbereiche eine getrennt ansteuerbare Gruppe von LEDs als Lichtquellen aufweist.

3. Verfahren nach Anspruch 2,
**dadurch gekennzeichnet,**
**dass** die an der Schicht (4) reflektierte Strahlung (5) jeweils aus unterschiedlichen Positionen mit dem optischen Detektor (1) oder mit mehreren an unterschiedlichen Positionen angeordneten optischen Detektoren (1) ortsaufgelöst erfasst wird, um Informationen über eine Strukturierung der Schicht (4) zu erhalten.

4. Verfahren nach einem der Ansprüche 1 bis 3,
**dadurch gekennzeichnet,**
**dass** die Schicht (4) in zeitlicher Abfolge mit optischer Strahlung (3) von wenigstens zehn unterschiedlichen Wellenlängen oder Wellenlängenbereichen beleuchtet und mit dem optischen Detektor (1) von der Schicht (4) bei den wenigstens zehn unterschiedlichen Wellenlängen oder Wellenlängenbereichen reflektierte Strahlung (5) synchron dazu erfasst wird.

5. Verfahren nach einem der Ansprüche 1 bis 4,
**dadurch gekennzeichnet,**
**dass** der optische Detektor (1) und die Beleuchtungseinrichtung (2) vor Durchführung der Prüfung anhand einer Referenzprobe kalibriert werden.

6. Verfahren nach Anspruch 5,
**dadurch gekennzeichnet,**
**dass** bei der ortsaufgelösten Erfassung der reflektierten Strahlung (5) ein mit dem optischen Detektor (1) für jede der Wellenlängen oder Wellenlängenbereiche erhaltenes Bild der Schicht (4) jeweils in der Intensität pixelweise mit einem von der Referenzprobe bei der gleichen Wellenlänge oder dem gleichen Wellenlängenbereich erhaltenen Bild verglichen wird, um die optischen Eigenschaften der Schicht (4) zu bestimmen.

7. Verfahren nach Anspruch 5 oder 6,
**dadurch gekennzeichnet,**
**dass** bei der ortsaufgelösten Erfassung der reflektierten Strahlung (5) eine Schichtdicke und/oder eine Homogenität der Schicht (4) als optische Eigenschaften ortsaufgelöst bestimmt wird.

8. Verfahren nach einem der Ansprüche 5 bis 7,
**dadurch gekennzeichnet,**
**dass** bei der ortsaufgelösten Erfassung der reflektierten Strahlung (5) eine Reflektivität der Schicht (4) als optische Eigenschaften ortsaufgelöst bestimmt wird.

9. Anordnung zur Prüfung optischer Eigenschaften einer Schicht, insbesondere einer Schicht einer Solarzelle oder eines Solarmoduls, mit einer Prüfebene,
- einer Beleuchtungseinrichtung (2), mit der eine in der Prüfebene angeordnete Oberfläche in zeitlicher Abfolge mit optischer Strahlung (3) unterschiedlicher Wellenlänge oder Wellenlängenbereiche beleuchtet werden kann,
- wenigstens einem optischen Detektor (1), mit dem an der Oberfläche reflektierte Strahlung (5) ortsaufgelöst erfasst werden kann, und
- einer Steuereinrichtung (6) zur Ansteuerung der Belichtungseinrichtung (2) und des optischen Detektors (1),
wobei die Beleuchtungseinrichtung (2) für jede der unterschiedlichen Wellenlängen oder Wellenlängenbereiche eine getrennt ansteuerbare Gruppe von Lichtquellen aufweist, und
die Steuereinrichtung (6) so ausgebildet ist, dass sie die Beleuchtungseinrichtung (2) zur Beleuchtung der Oberfläche in zeitlicher Abfolge mit optischer Strahlung (3) der unterschiedlichen Wellenlängen oder Wellenlängenbereiche und den optischen Detektor (1) zur synchronen Erfassung der von der Schicht bei den unterschiedlichen Wellenlängen oder Wellenlängenbereichen reflektierten Strahlung (5) ansteuert, **dadurch gekennzeichnet dass** die Beleuchtungseinrichtung (2) so ausgebildet ist, dass sie bei jeder der Wellenlängen oder jedem der Wellenlängenbereiche eine Fläche von wenigstens 100 cm² in der Prüfebene vollflächig beleuchtet, und wobei der optische Detektor die gesamte Schicht ortsaufgelöst erfasst.

10. Anordnung nach Anspruch 9,
**dadurch gekennzeichnet,**
**dass** die Beleuchtungseinrichtung (2) so ausgebildet ist, dass sie wenigstens zehn getrennt ansteuerbare Gruppen von Lichtquellen für die unterschiedlichen Wellenlängen oder Wellenlängenbereiche aufweist.

11. Anordnung nach einem der Ansprüche 9 bis 10,
**dadurch gekennzeichnet,**
**dass** der optische Detektor (1) relativ zur Prüfebene verstellbar angeordnet ist, um eine Erfassung der an der Oberfläche reflektierten Strahlung (5) aus unterschiedlichen Positionen zu ermöglichen.

## Claims

1. Method for testing optical properties of a layer, particularly a layer of a solar cell or a solar module, in which the full area of the layer (4) is illuminated with an illuminating device (2) and radiation (5) reflected on the layer (4) is captured with at least one optical detector (1), **characterized in that** the full area of the layer (4) is illuminated in temporal sequence with optical radiation (3) of different wavelengths or wavelength ranges, and reflected radiation (5) from the entire layer is captured synchronously thereto in spatially resolved manner at the different wavelengths or wavelength ranges with the optical detector (1), wherein the layer (4) is illuminated with an illuminating device (2) which includes a separately actuatable group of light sources for each of the different wavelengths or wavelength ranges, wherein the full surface of an area of at least 100 cm² is illuminated at each of the wavelengths or each of the wavelength ranges.

2. Method according to Claim 1, **characterized in that** the layer (4) is illuminated with an illuminating device (2) which includes a separately actuatable group of LEDs as light sources for each of the different wavelengths or wavelength ranges.

3. Method according to Claim 2, **characterized in that** the reflected radiation (5) on the layer (4) is captured in spatially resolved manner from different positions in each case with the optical detector (1) or with multiple optical detectors (1) arranged at different positions to obtain information about a structure of the layer (4).

4. Method according to any one of Claims 1 to 3, **characterized in that** the layer (4) is illuminated in temporal sequence with optical radiation (3) of at least ten different wavelengths or wavelength ranges, and reflected radiation (5) from the layer (4) is captured synchronously thereto in spatially resolved manner with the optical detector (1) at the at least ten different wavelengths or wavelength ranges.

5. Method according to any one of Claims 1 to 4, **characterized in that** the optical detector (1) and the illuminating device (2) are calibrated against a reference sample before the test is carried out.

6. Method according to Claim 5, **characterized in that** in the spatially resolved capturing of the reflected radiation (5) an image of the layer (4) obtained with the optical detector (1) for each of the wavelengths or wavelength ranges is compared pixel-by-pixel in terms of intensity with an image of the reference sample obtained at the same wavelength or wavelength range in each case in order to determine the properties of the layer (4).

7. Method according to Claim 5 or 6, **characterized in that** in the spatially resolved capturing of the reflected radiation (5) a layer thickness and/or a homogeneity of the layer (4) is determined in spatially resolved manner as optical properties.

8. Method according to any one of Claims 5 to 7, **characterized in that** in the spatially resolved capturing of the reflected radiation (5) a reflectivity of the layer (4) is determined in spatially resolved manner as optical properties.

9. Assembly for testing optical properties of a layer, particularly a layer of a solar cell or a solar module, with a test plane,
- an illuminating device (2) with which a surface arranged in the test plane can be illuminated in temporal sequence with optical radiation (3) of different wavelengths or wavelength ranges,
- at least one optical detector (1) with which reflected radiation (5) on the surface can be captured in spatially resolved manner, and
- a control device (6) for actuating the illuminating device (2) and the optical detector (1),
wherein the illuminating device (2) has a separately actuatable group of light sources for each of the different wavelengths or wavelength ranges, and the control device (6) is designed such that it actuates the illuminating device (2) to illuminate the surface in temporal sequence with optical radiation (3) of the different wavelengths or wavelength ranges and the optical detector (1) to synchronously capture the reflected radiation (5) from the layer at the different wavelengths or wavelength ranges,
**characterized in that** the illuminating device (2) is designed such that it illuminates the entire area of a surface of at least 100 cm² in the test plane at each of the wavelengths or each of the wavelength ranges, and wherein the optical detector captures the entire layer in spatially resolved manner.

10. Assembly according to Claim 9, **characterized in that** the illuminating device (2) is designed such that it includes at least ten separately actuatable groups of light sources for the different wavelengths or wavelength ranges.

11. Assembly according to any of Claims 9 to 10, **characterized in that** the optical detector (1) is arranged so as to be movable relative to the test plane to enable the reflected radiation (5) on the surface to be captured from different positions.

## Revendications

1. Procédé de contrôle des qualités optiques d'une couche, notamment une couche d'une cellule solaire ou d'un module solaire, dans lequel la couche (4) est illuminée sur la totalité de sa surface avec un dispositif d'illumination (2) et le rayonnement (5) réfléchi sur la couche (4) est détecté avec au moins un détecteur optique (1), **caractérisé en ce que** la couche (4) est illuminée sur la totalité de sa surface en séquence temporelle avec un rayonnement optique (3) de longueur d'onde de plage de longueur d'onde différente et avec le détecteur optique (1) en présence de longueurs d'ondes ou plages de longueurs d'ondes différentes, le rayonnement reflété (5) est détecté par la totalité de la couche de manière synchronisée à celles-ci avec résolution spatiale, dans lequel l'éclairage de la couche (4) a lieu avec un dispositif d'éclairage (2), qui pour chacune des différentes longueurs d'onde ou plages de longueur d'onde présente un groupe de sources lumineuses pouvant être commandées séparément, dans lequel une surface d'au moins 100 cm² est illuminée en totalité en présence de chacune des longueurs d'onde ou chacune des plages de longueur d'onde.

2. Procédé selon la revendication 1, **caractérisé en ce que** l'éclairage de la couche (4) a lieu avec un dispositif d'éclairage (2), qui pour chacune des longueurs d'onde ou plages de longueur d'onde différentes présente un groupe pouvant être commandé séparément de DELs faisant office de sources lumineuses.

3. Procédé selon la revendication 2, **caractérisé en ce que** le rayonnement (5) reflété sur la couche (4) est détecté avec résolution spatiale respectivement à partir de positions différentes avec le détecteur optique (1) ou avec plusieurs détecteurs optiques (1) disposés à des positions différentes, afin d'obtenir des informations relatives à une structuration de la couche (4).

4. Procédé selon une des revendications 1 à 3, **caractérisé en ce que** la couche (4) est illuminée en séquence temporelle avec un rayonnement optique (3) d'au moins dix longueurs d'ondes ou plages de longueurs d'ondes différentes et en présence d'au moins dix longueurs d'onde ou plages de longueurs d'onde différentes le rayonnement reflété est détecté avec le détecteur optique (1) par la couche (4) de manière synchrone à celles-ci.

5. Procédé selon une des revendications 1 à 4, **caractérise en ce que** le détecteur optique (1) et le dispositif d'éclairage (2) sont étalonnées en effectuant le contrôle sur la base d'une sonde de référence.

6. Procédé selon la revendication 5, **caractérisé en ce que** lors de la détection avec résolution spatiale du rayonnement reflété (5), une image de la couche (4) obtenue avec le détecteur optique (1) pour chacune des longueurs d'onde ou plages de longueurs d'onde est respectivement comparée en intensité par pixels avec une image obtenue par la sonde de référence en présence de la même longueur d'onde ou de la même plage de longueur d'onde, afin de déterminer les propriétés optiques de la couche (4).

7. Procédé selon la revendication 5 ou 6, **caractérisé en ce que** lors de la détection avec résolution spatiale du rayonnement reflété (5) une épaisseur de couche et/ou une homogénéité de la couche (4) est déterminée avec résolution spatiale comme des propriétés optiques.

8. Procédé selon une des revendications 5 à 7, **caractérisé en ce que** lors de la détection avec résolution spatiale du rayonnement réfléchi (5) une réflexivité de la couche (4) est déterminée avec résolution spatiale comme des propriétés optiques.

9. Dispositif de contrôle des propriétés optiques d'une couche, notamment d'une couche d'une cellule solaire ou d'un module solaire, comportant un plan de contrôle,
- un dispositif d'éclairage (2), avec lequel une surface disposée dans le plan de contrôle doit être éclairée en séquence temporelle avec un rayonnement optique (3) de longueurs d'onde ou de plages de longueurs d'onde différentes,
- au moins un détecteur optique (1), avec lequel un rayonnement (5) réfléchi sur la surface peut être détecté avec résolution spatiale, et
- un dispositif de commande (6) pour commander le dispositif d'éclairage (2) et le détecteur optique (1),
dans lequel le dispositif d'éclairage (2) pour chacune des longueurs d'onde ou plages de longueurs d'onde différentes présente un groupe pouvant être commandé séparément de sources lumineuses, et
le dispositif de commande (6) est configuré de telle sorte qu'il commande le dispositif d'éclairage (2) pour l'éclairage de la surface en séquence temporelle avec un rayonnement optique (3) de longueurs d'onde ou plages de longueurs d'onde différentes et commande le détecteur optique (1) à des fins de détection synchrone du rayonnement (5) réfléchi par la couche en présence de longueurs d'onde ou plages de longueurs d'onde différentes,
**caractérisé en ce que** le dispositif d'éclairage (2) est configuré de telle sorte qu'il éclaire en présence de chacune des longueurs d'onde ou chacune des plages de longueurs d'onde une surface d'au moins 100 cm² dans le plan de contrôle sur la totalité de la surface et dans lequel le détecteur optique détecte la totalité de la couche avec résolution spatiale.

10. Dispositif selon la revendication 9, **caractérisé en ce que** le dispositif d'éclairage (2) est configuré de telle sorte qu'il présente au moins dix groupes de sources lumineuses pouvant être commandées séparément pour les longueurs d'onde ou plages de longueurs d'onde différentes.

11. Dispositif selon une des revendications 9 à 10, **caractérisé en ce que** le détecteur optique (1) est disposés de manière réglable par rapport au plan de contrôle, afin de permettre une détection du rayonnement (5) réfléchi sur la surface à partir de positions différentes.
